# EUROPEAN PATENT APPLICATION

(11) **EP 1 772 510 A2**
(43) Date of publication of application: **11.04.2007**
(21) Application number: 06254911.8
(22) Date of filing: 22.09.2006
(51) Int. Cl.: C09K 21/14, C08L 23/00

(54) **Flame retardant resin composition with improved whitening resistance in bending deformation**

(30) Priority: 30.09.2005 KR 20050091760
(71) Applicant: LS Cable Ltd., Seoul 135-090 (KR)
(72) Inventor: Chang, Do-Hoon, Seocho-gu, Seoul 137-880 (KR); Bae, Sun-Hyuk, Kyungki-do 435-040 (KR); Kim, June-Sun c/o LS Cable Institute, Kyungki-do, 431-749 (KR); Lee, Gun-Joo c/o LS Cable Institute, Kyungki-do, 431-749 (KR)
(74) Representative: Tombling, Adrian George

(57) **Abstract**

Disclosed is a resin composition for improving a whitening resistance in bending deformation. The flame retardant polypropylene-based resin composition with an improved whitening resistance in bending deformation according to the present invention includes a polypropylene-based resin, a polyolefin elastomer, a modified polyolefin elastomer grafted with polar groups and an inorganic flame retardant, wherein the polypropylene-based resin is included at a content of 5 to 50 % by weight of the total composition, wherein the polyolefin elastomer is included at a content of 0.1 to 50 % by weight of the total composition, wherein the modified polyolefin elastomer grafted with polar groups is included at a content of 0.1 to 30 % by weight of the total composition, and wherein the inorganic flame retardant is included at a content of 30 to 75 % by weight of the total composition. The resin composition according to the present invention may be used as a coating material of electrical wires, and therefore may be useful to minimize a whitening phenomenon in bending deformation without deteriorated physical properties such as tensile strength, tensile elongation, etc.

## Description

### BACKGROUND OF THE INVENTION

### Field of the invention

The present invention relates to a flame retardant resin composition capable of being used for various applications as well as a coating material of various electrical wires, and more particularly to a flame retardant resin composition capable of minimizing a whitening phenomenon in bending deformation since a modified polypropylene resin grafted with polar groups or a polyolefin elastomer is added to improve an intermolecular bonding force.

### Description of the Related Art

Generally, an electrical wire has a flame retardant coating layer. Resins containing halogen such as PVC have been widely used as materials for forming a flame retardant coating layer in the art. However, there have been attempts to substitute the materials with other materials due to safety and environmental problems caused by toxic gases generated upon combustion, although the materials are excellent in flame retardancy.

Concerns have been increasingly focused on polypropylene-based resins as halogen-free resins as the various attempts proceed. The polypropylene-based resin has been widely used in the fields of household electrical appliances, construction materials, materials for interior decorations, automotive parts and the like because it is excellent in processability, chemical resistance, weather resistance and mechanical strength, and also its use as a coating material of an electrical wire is gradually expanded.

However, the polypropylene-based resin has so deteriorated flame retardancy, and therefore various flame retardants have been used as additives so as to solve the problem. Flame retardants containing halogen such as chlorine or boron have been used in the prior art, but a composition having an excellent flame retardancy may not be obtained in this case. Also, the flame retardants containing halogen have been limitedly used since the flame retardants generate toxic gases upon combustion, which are harmful to human bodies and corrode equipments.

In recent years, inorganic flame retardants such as metal hydroxides, which do not exhaust toxic gases during a combustion process, has been used to solve the problem. However, a large amount of inorganic flame retardant should be used to give commercially satisfactory flame retardancy to the polypropylene-based resin, but a molded product containing the inorganic flame retardant has deteriorated physical properties such as moldability and tensile strength as the amount of the inorganic flame retardant increases. Also, the molded product containing the high content of the inorganic flame retardant may be poor in abrasion resistance and physical properties, and a whitening phenomenon in bending deformation may also be generated in an electrical wire.

### SUMMARY OF THE INVENTION

The present invention is designed to solve the problems in the prior art that a molded product is poor in physical properties such as moldability and tensile strength and a whitening phenomenon in bending deformation is generated in the molded product if an inorganic flame retardant is used at an increased content, and therefore it is an object of the present invention to provide a flame retardant polypropylene-based resin composition with an improved whitening resistance in bending deformation, capable of solving the above-mentioned technical problems.

In order to accomplish the above object, the present invention provides a flame retardant polypropylene-based resin composition with an improved whitening resistance in bending deformation, for example including a polypropylene-based resin, a polyolefin elastomer, a modified polyolefin elastomer grafted with polar groups and an inorganic flame retardant wherein the polypropylene-based resin is included at a content of 5 to 50 % weight of the total composition, wherein the polyolefin elastomer is included at a content of 0.1 to 50 % weight of the total composition, wherein the modified polyolefin elastomer grafted with polar groups is included at a content of 0.1 to 30 % weight of the total composition, and wherein the inorganic flame retardant is included at a content of 30 to 75 % weight of the total composition.

The above-mentioned flame retardant polypropylene-based resin composition with an improved whitening resistance according to the present invention may further include a modified polypropylene-based resin grafted with polar groups. Accordingly, in order to accomplish the above object, the present invention also provides a flame retardant polypropylene-based resin composition with an improved whitening resistance, for example including a polypropylene-based resin, a modified polypropylene-based resin grafted with polar groups, a polyolefin elastomer, a modified polyolefin elastomer grafted with polar groups, and an inorganic flame retardant, wherein the polypropylene-based resin is included at a content of 5 to 50 % weight of the total composition, wherein the modified polypropylene-based resin grafted with polar groups is included at a content of 0.1 to 10 % weight of the total composition, wherein the polyolefin elastomer resin is included at a content of 0.1 to 50 % weight of the total composition, wherein the modified polyolefin elastomer grafted with polar groups is included at a content of 0.1 to 30 % weight of the total composition, and wherein the inorganic flame retardant is included at a content of 30 to 75 % weight of the total composition.

At this time, the polar groups with which the modified polypropylene-based resin is grafted is preferably maleic anhydride. The modified polypropylene-based resin grafted with the polar groups functions to enhance an abrasion resistance and a tensile strength by forming secondary bonds between the polypropylene-based resin and a filler. Therefore, the modified polypropylene-based resin may be optionally included in the resin composition according to the present invention in consideration of its functions, and in this case is preferably included in a content of 0.1 to 10 % by weight of the total resin composition. Meanwhile, an effect of the modified polypropylene-based resin is not proportionally improved depending on an increasing amount of the added modified polypropylene-based resin, but on the contrary a manufacturing cost may be increased due to an excessive amount of the modified polypropylene-based resin if the content of the modified polypropylene-based resin grafted with polar groups exceeds the upper numerical limit. Also, an amount of the used modified resin may be reduced as a graft ratio of polar groups increases, for example the modified polypropylene preferably has a graft ratio of approximately 1 %. The modified polypropylene-based resin, which may be used in the present invention, is not particularly limited thereto.

Meanwhile, the above-mentioned objects of the present invention may be sufficiently accomplished in both cases as described above about the flame retardant polypropylene-based resin composition with an improved whitening resistance according to the present invention (hereinafter, referred to as "a resin composition according to the present invention"), as follows.

The polypropylene-based resin in the resin composition according to the present invention is preferably selected from the group consisting of a homopolymer, a random copolymer and a block copolymer. The polypropylene-based resin is preferably included in the composition of the present invention at a content of 5 to 50 % by weight on the basis of the total weight of the composition, and the content of the added polypropylene-based resin is determined in consideration of compatibility to other added components, moldability and physical properties of the resultant composition, etc. The compatibility to other added components may not be improved if the content of the polypropylene-based resin is less than the lower numerical limit, while moldability or physical properties of the composition may be deteriorated if the content exceeds the upper numerical limit. Meanwhile, the polypropylene-based resin has been widely known in the art, and may be, but is not limited to, a homopolymer or a copolymer with an ethylene monomer and the like, for example a block copolymer, a random copolymer, etc.

The polyolefin elastomer resin in the resin composition according to the present invention is preferably an ethylene α-olefin copolymer or an SEBS (styrene-ethylene-butylene-styrene) copolymer. The polyolefin elastomer resin in the resin composition according to the present invention is preferably included at a content of 0.1 to 50 % by weight of the total composition. The polyolefin elastomer resin acts to improve physical properties such as a tensile strength, an elongation and the like as well as reduce a whitening phenomenon capable of being caused in bending deformation. Effects on the addition of the polyolefin elastomer resin may not be obtained if the content of the polyolefin elastomer resin is less than the lower numerical limit, but on the contrary the physical properties may be deteriorated if the content exceeds the upper numerical limit. In the present invention, an ethylene α-olefin copolymer such as an ethylene-octene copolymer and an ethylene-butene copolymer, an SEBS (styrene-ethylene-butylene-styrene) copolymer and the like are preferably used as the polyolefin elastomer resin, but the present invention is not necessarily limited to these materials.

The polar groups, with which the modified polyolefin elastomer resin in the resin composition according to the present invention is grafted, is preferably, but not necessarily limited to, maleic anhydride, and the modified polyolefin elastomer grafted with the polar groups is preferably included at a content of 0.1 to 30 % by weight of the total resin composition. The modified polyolefin elastomer resin functions to reduce a whitening phenomenon and improve an abrasion resistance by maximally forming secondary bonds between a matrix resin and the inorganic flame retardant, thereby to minimize voids generated by cracks in intermolecular bonds when a molded product is subject to stresses. The bonding force between the matrix resin and the inorganic flame retardant is not satisfactorily enhanced if the content of the modified polyolefin elastomer grafted with polar groups is less than the lower numerical limit, and therefore the whitening phenomenon may be further aggravated since the voids may be formed between molecules in the composition when a molded product is subject to external stresses, while an effect of the modified polypropylene-based resin may not be proportionally improved depending on an increasing amount of the added modified polyolefin elastomer grafted with polar groups and a manufacturing cost may be also increased due to an excessive amount of the modified polyolefin elastomer grafted with polar groups if the content exceeds the upper numerical limit. The modified polyolefin elastomer resin grafted with polar groups in the resin composition according to the present invention may be used without any particular limit.

Meanwhile, the polypropylene-based resin, the modified polypropylene-based resin grafted with polar groups, the polyolefin elastomer resin and the modified polyolefin elastomer resin grafted with polar groups, each being included in the resin composition according to the present invention as described above, may be manufactured using, but is not particularly limited to, methods widely known in the prior art, and be easily commercially available, if necessary.

The inorganic flame retardant in the resin composition according to the present invention is preferably selected from the group consisting of, but not necessarily limited to, magnesium hydroxide, aluminum hydroxide and mixtures thereof. Meanwhile, the used inorganic flame retardant may be not surface-treated, or be surface-treated with materials such as vinylsilane, aminosilane, stearic acid, siloxane-based polymer or the likes. The inorganic flame retardant in the resin composition according to the present invention is preferably included at a content of 30 to 75 % by weight of the total resin composition. The content of the inorganic flame retardant may be determined in consideration of excellent flame retardancy and physical properties of the composition, compatibility to other components, etc. The flame retardancy may not be accomplished if the content of the inorganic flame retardant is less than the lower numerical limit, and the physical properties may be deteriorated if the content exceeds the upper numerical limit.

In addition, the composition according to the present invention may further include various functional additives widely used in the resin composition if the effect of the present invention is deteriorated due to the use of the various functional additives. These additives includes an antioxidant, a UV stabilizer, a heat stabilizer, a lubricant, an anti-blocking agent, an antistatic agent, wax, a coupling agent, a pigment, a processing aid, etc., but various kinds of additives may be used depending on purpose of their addition, if necessary, although not illustrated herein. The additives are preferably included at a content of 1 to 5 % by weight of the total resin composition according to the present invention as described above. The purposes for their addition may not be accomplished if the content of the additives is less than the lower numerical limit, while general physical properties of the resin composition may be deteriorated unlike the purposes for their addition if the content exceeds the upper numerical limit.

However, the resin composition according to the present invention may be useful to maintain a high flame retardancy and prevent physical properties such as a tensile strength or an elongation from being deteriorated as well as minimize a whitening phenomenon, and therefore the resin composition may effectively used as a coating material of various electrical wires. The composition according to the present invention may be manufactured using, but is not limited to, methods known in the art. At this time, a kneader, a banbury, an open roll or the likes may be used in the methods.

### DESCRIPTION OF THE PREFERRED EMBODIMENT

Hereinafter, preferred embodiments of the present invention will be described in detail for the purpose of better understandings. However, the description proposed herein is just a preferable example for the purpose of illustrations only, not intended to limit the scope of the invention, so it should be understood that other equivalents and modifications could be made thereto without departing from the spirit and scope of the invention. Preferred embodiments of the present invention are provided to describe the present invention more fully, as apparent to those skilled in the art.

### Embodiments 1 to 5 and Comparative examples 1 to 6

Components as listed in the following Tables 1 and 2 were mixed at 160 to 170 °C for 10 to 20 minutes using a twin screw extruder as a mixing apparatus, and then the resultant mixture was extruded into a form of sheet, and the resultant sheet was then molded at 170°C for 10 minutes in an electric heating press machine under a predetermined pressure and cooled to prepare a test specimen. The value units as listed in the following Tables 1 and 2 are commonly represented by "% by weight".

**Table 1**

| | Embodiments | | | | |
|---|---|---|---|---|---|
| | 1 | 2 | 3 | 4 | 5 |
| A | 10 | 24 | 20 | 25 | 50 |
| B | 3 | 4 | 6 | 8 | 5 |
| C | 9 | 24 | 11 | 4 | 5 |
| D | 5 | 10 | 20 | 30 | 5 |
| E | 70 | 35 | 40 | 30 | 30 |
| F | 3 | 3 | 3 | 3 | 5 |

In Table 1, Component A represents the polypropylene random copolymer resin R724J commercially manufactured from GS Caltex Corporation, Component B represents the modified polypropylene-based resin grafted with polar groups CM1120 commercially manufactured from Honam Petrochemical Corp., Component C represents the polyolefin elastomer resin Engage 8150 commercially manufactured from Dupont Dow Elastomer (U.S), Component D represents the maleic anhydride-grafted polyolefin elastomer resin Fusabond MN 493D commercially manufactured from Dupont (U.S), Component E represents the magnesium hydroxide Magnifin H5 commercially manufactured from Albemarle (Germany), and Component F represents the additives including other antioxidants, etc.

**Table 2**

| | Comparative examples | | | | | |
|---|---|---|---|---|---|---|
| | 1 | 2 | 3 | 4 | 5 | 6 |
| A | 20 | 22.5 | 25 | 25 | 40 | 35 |
| B-1 | 20 | 17.5 | 20 | 10 | - | 5 |
| C | 60 | 60 | 55 | 65 | 60 | 60 |

In Table 2, Component A represents the polypropylene random copolymer resin R724J commercially manufactured from GS Caltex Corporation, and Component B-1 represents the polyolefin elastomer resin Engage 8150 commercially manufactured from Dupont Dow Elastomer (U.S). Component C represents the inorganic flame retardant Magnifin H5 commercially manufactured from Albemarle (Germany), which is magnesium hydroxide particle.

Coating materials for an electrical wire, which are the molded products manufactured using the compositions according to Embodiments 1 to 5 and Comparative example 1 to 6, were evaluated for a tensile strength, an elongation, a whitening resistance and an abrasion resistance, as follows.

### Measurement of Tensile Property

Test specimens were prepared according to ASTM D 638 (Standard Test Method for Tensile Properties of Plastics), and then measured for a tensile strength and an elongation at break, respectively, using a universal tester. At this time, the tensile strength is by Pascal (Pa), which is represented by maximum load (N) / initial cross-sectional area (m²) of test specimen, and the elongation is by percent (%), which is represented by an extended length at break / an initial length × 100. The measured results are listed in the following Table 3, respectively.

### Measurement of Whitening Resistance in Bending Deformation

A whitening resistance may be evaluated with a naked eye when the insulating materials of an electrical wire were actually bent under conditions of a resin thickness of 1 mm and a curvature radius of 5 mm. The coating material compositions, prepared for evaluating a whitening resistance under the same conditions as described above, were extrusion-molded into test specimens having a thickness of 1 mm, and then a whitening resistance was evaluated with a naked eye by measuring whether or not a whitening phenomenon occurs when the specimens were bent under a condition of a curvature radius of 5 mm. In addition, cylindrical test specimens having a diameter of 2 mm were prepared using a capillary viscometer, and then a whitening resistance was evaluated with a naked eye by measuring whether or not a whitening phenomenon occurs when the cylindrical test specimens were bent under a condition of the same curvature radius. The evaluation results are listed in the following Table 3.

### Abrasion Resistance

As a needle-scrape experiment, a plumb having a weight of 710 g was put on a 0.45sq needle, and the needle moved forward and backward 300 times on test specimens having a width of 2 mm, a thickness of 1 mm and a length of 100 mm, and then a thickness (µm) of the abraded test specimen was measured. The results are listed in the following Table 3.

**Table 3**

| | Embodiments | | | | | Comparative examples | | | | | |
|---|---|---|---|---|---|---|---|---|---|---|---|
| | 1 | 2 | 3 | 4 | 5 | 1 | 2 | 3 | 4 | 5 | 6 |
| Tensile Strength (Mpa) | 9.6 | 15.7 | 22.8 | 25.4 | 12.0 | 10.1 | 10.6 | 11.5 | 12.8 | 8.2 | 9.3 |
| Elongation (%) | 124 | 540 | 423 | 247 | 352 | 246 | 244 | 221 | 196 | 10 | 44 |
| Whitening Resistance | Low | None | None | None | Low | High | High | High | High | High | High |
| Abrasion Resistance (µm) | 32 | 18 | 14 | 9 | 5 | 97 | 85 | 79 | 71 | 58 | 68 |

As seen in Table 3, it was revealed that, unlike the molded products prepared according to Comparative examples 1 to 6, a whitening phenomenon does not occur or rarely occur in the coating materials of an electrical wire, which are the molded products prepared according to Embodiments 1 to 5 of the present invention. When compared to the comparative examples, it was also seen that the coating materials of an electrical wire have an excellent abrasion resistance without highly deteriorated physical properties such as tensile strength and tensile elongation in the embodiments according to the present invention. On the contrary, it was seen that the molded products clearly show a whitening phenomenon and a relatively low abrasion resistance in the comparative examples.

As described above, the best embodiments of the present invention are disclosed. Therefore, the specific terms are used in the specification and appended claims, but it should be understood that the description proposed herein is just a preferable example for the purpose of illustrations only, not intended to limit the scope of the invention.

### APPLICABILITY TO THE INDUSTRY

As described abode, the molded product made of the resin composition according to the present invention has an excellent abrasion resistance as well as minimizes a whitening phenomenon in bending deformation without deteriorated physical properties such as tensile strength, tensile elongation, etc.

## Claims

1. A flame retardant polypropylene-based resin composition with an improved whitening resistance in bending deformation, comprising a polypropylene-based resin, a polyolefin elastomer, a modified polyolefin elastomer grafted with polar groups and an inorganic flame retardant,
wherein the polypropylene-based resin is included at a content of 5 to 50 % by weight of the total composition,
wherein the polyolefin elastomer is included at a content of 0.1 to 50 % by weight of the total composition,
wherein the modified polyolefin elastomer grafted with polar groups is included at a content of 0.1 to 30 % by weight of the total composition, and
wherein the inorganic flame retardant is included at a content of 30 to 75 % by weight of the total composition.

2. A flame retardant polypropylene-based resin composition with an improved whitening resistance in bending deformation, comprising a polypropylene-based resin, a modified polypropylene-based resin grafted with polar groups, a polyolefin elastomer, a modified polyolefin elastomer grafted with polar groups, and an inorganic flame retardant,
wherein the polypropylene-based resin is included at a content of 5 to 50 % by weight of the total composition,
wherein the modified polypropylene-based resin grafted with polar groups is included at a content of 0.1 to 10 % by weight of the total composition,
wherein the polyolefin elastomer is included at a content of 0.1 to 50 % by weight of the total composition,
wherein the modified polyolefin elastomer grafted with polar groups is included at a content of 0.1 to 30 % by weight of the total composition, and
wherein the inorganic flame retardant is included at a content of 30 to 75 % by weight of the total composition.

3. The flame retardant polypropylene-based resin composition with an improved whitening resistance in bending deformation according to claim 1 or 2,
wherein the polypropylene-based resin is selected from the group consisting of a homopolymer, a random copolymer and a block copolymer.

4. The flame retardant polypropylene-based resin composition with an improved whitening resistance in bending deformation according to claim 1 or 2,
wherein the polyolefin elastomer resin is an ethylene α-olefin copolymer or an SEBS (styrene-ethylene-butylene-styrene) copolymer.

5. The flame retardant polypropylene-based resin composition with an improved whitening resistance in bending deformation according to claim 2,
wherein the polar groups with which the modified polypropylene-based resin is grafted is maleic anhydride.

6. The flame retardant polypropylene-based resin composition with an improved whitening resistance in bending deformation according to claim 1 or 2,
wherein the polar groups with which the modified polyolefin elastomer resin is grafted is maleic anhydride.

7. The flame retardant polypropylene-based resin composition with an improved whitening resistance in bending deformation according to claim 1 or 2,
wherein the inorganic flame retardant is selected from the group consisting of magnesium hydroxide, aluminium hydroxide and mixtures thereof.

8. The flame retardant polypropylene-based resin composition with an improved whitening resistance in bending deformation according to claim 7,
wherein the inorganic flame retardant is surface-treated with at least one selected from the group consisting of vinylsilane, aminosilane, stearic acid and siloxane-based polymer.

9. The flame retardant polypropylene-based resin composition with an improved whitening resistance in bending deformation according to claim 1 or 2, further comprising at least one selected from the group consisting of an antioxidant, a UV stabilizer, a heat stabilizer, a lubricant, an anti-blocking agent, an antistatic agent, wax, a coupling agent, a pigment and a processing aid at a content of 1 to 5 % by weight of the total resin composition.
